# EUROPEAN PATENT SPECIFICATION

(11) **EP 2 828 079 B1**
(45) Date of publication and mention of the grant of the patent: **06.01.2021**
(21) Application number: 13763880.5
(22) Date of filing: 15.03.2013
(51) Int. Cl.: C09J 7/24, B32B 27/32, C08L 23/08, C08L 23/06, G09F 3/02

(54) **LABEL FACESTOCK FILM**
ETIKETTENOBERSCHICHTFOLIE
FILM POUR FRONTAL D'ÉTIQUETTE

(30) Priority: 23.03.2012 FI 20125333
(43) Date of publication of application: 28.01.2015
(60) Divisional application: 16184928.6
(73) Proprietor: UPM Raflatac Oy, 33310 Tampere (FI)
(72) Inventor: VÄHÄLÄ, Martti, FI-33820 Tampere (FI); MITCHELL, Noel, 42111 Wuppertal (DE); SAXBERG, Tom, 20500 Turku (FI)
(74) Representative: Berggren Oy, Tampere
(86) International application number: PCT/FI2013/050297
(87) International publication number: WO 2013/140035

(56) References cited:
- EP-A1- 1 072 663
- WO-A1-2007/146986
- WO-A2-99/38960
- WO-A2-2012/127121
- US-A- 5 145 728
- US-A- 5 176 948
- US-A1- 2003 219 610
- US-A1- 2005 048 271
- US-A1- 2005 136 274
- US-A1- 2005 142 319
- US-A1- 2011 318 557

## Description

### Field of the Invention

The present invention relates to labels, and more specifically to a facestock film of the label.

### Background of the Invention

It is general practice to apply a label to a surface of an item to provide decoration, and/or to display information about the product being sold, such as content of the item, a trade name or logo. A label typically comprises a face material and an adhesive layer to attach the face material to an item. Label face materials may be either paper or plastic film or combination of these. Plastic labels, in contrast to paper labels, are increasingly preferred. The plastic labels available include films made, for example, from poly(vinyl chloride) (PVC), polypropylene (PP) and polyethylene (PE).

EP1072663 relates to a base film for a pressure-sensitive adhesive tape, where tackifier resin has been preliminarily added to the base film.

### Summary of the Invention

It is an object to provide plastic films for labels. It is an object of the present invention to provide a plastic film composition having attractive properties for labelling applications. It is an object to provide a method for producing a laminated structure and labels thereof.

According to a first aspect, a label according to claim 1, including a facestock layer and an adhesive layer against one side of the facestock layer, is provided. The facestock layer consists of at least one plastic film comprising low density polyethylene (LDPE), high density polyethylene (HDPE) and an additive comprising hydrocarbon resin (HC).

According to a second aspect, a use of a label for labelling of an item, according to claim 6, in order to provide decoration, and or to display information about the content of the item, is provided.

According to a third aspect, a method for producing a label according to claim 7 is provided. The method includes at least forming a facestock layer consisting of a plastic film including low density polyethylene, high density polyethylene and an additive comprising hydrocarbon resin, combining an adhesive layer to a release liner and to one side of a facestock layer so as to form a laminated structure, and cutting the laminated structure so as to form individual labels.

According to a fourth aspect, a combination of an item and a label according to claim 8 is provided. The combination consists of a label adhered to a surface of the item, the label comprising a facestock layer and an adhesive layer against one side of the facestock layer. The facestock layer consists of a plastic film comprising low density polyethylene, high density polyethylene and an additive comprising hydrocarbon resin (HC).

According to a fifth aspect, a facestock layer of a label according to claim 5 is provided. The facestock layer consists of at least one plastic film comprising low density polyethylene, high density polyethylene and an additive, and wherein said facestock layer has haze at most 25%, stiffness between 35 and 60 mN, and thickness of less than 80 microns.

Further embodiments are presented in the dependent claims.

The plastic film of the facestock layer comprises an additive or a hydrocarbon resin having an amount of between 5 and 40 wt-%, preferably between 10 and 30 wt-%, most preferably between 5 and 25 wt-% or between 10 and 25 wt-% .

The plastic film comprises high density polyethylene having an amount of at most 20 wt-%, preferably less than 15 or 10 wt-%, and most preferably less than 5 wt-%.

The facestock layer is non-oriented. The haze of the facestock layer according to claim 4 is less than 60%, preferably less than 50, and most preferably less than 30%.

The facestock layer of the label is non-oriented. In addition, the label is a pressure sensitive label.

### Description of the Drawings

The invention will be explained in the following with reference to the appending drawings, where
- Fig. 1: presents, in a cross sectional view, a laminate structure for labels,
- Fig. 2: presents, in a cross sectional view, a laminate comprising diecut labels,
- Fig. 3: presents, in a cross-sectional view individual labels released from the liner.

### Detailed Description of the Invention

A label consists of a label film, also called as a carrier, substrate, face material, or facestock layer, and an adhesive layer to affix the label film to an article. The label film is commonly coated on one side with the adhesive and usually printed at least on the other side. Label film can be attached to an item by heat activated adhesive, wet glue adhesive, or pressure sensitive adhesive (PSA). The pressure sensitive labels, also called self-adhesive labels, consisting of a pressure sensitive adhesive, can be adhered to most surfaces through an adhesive layer without the use of a secondary agent such as solvents or heat to strengthen the bond. The pressure sensitive adhesive forms a bond when pressure is applied on the label at room temperature, adhering the label with the item to be labelled.

Various requirements exists for the labels, e.g. no-label look, clarity, conformability, surface smoothness, moisture resistance, rigidity, ease of die-cutting, suitability for printing.

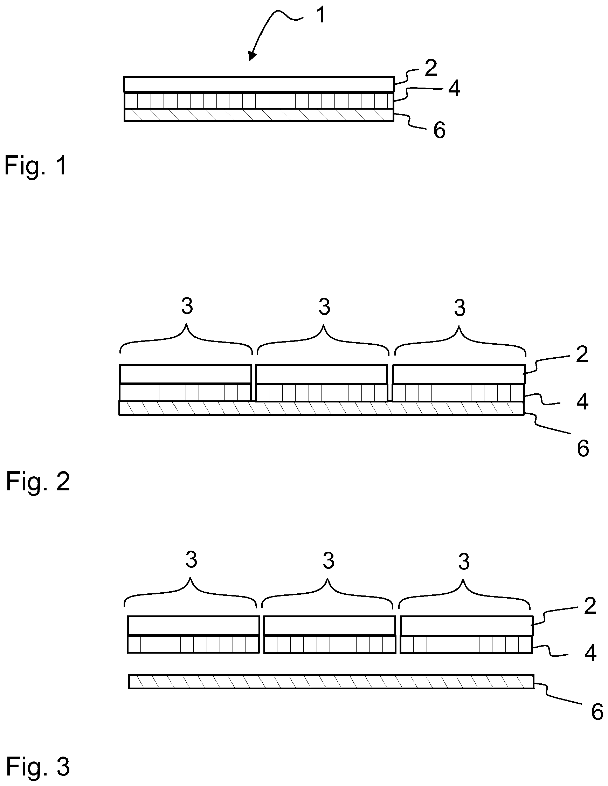

Referring to Fig. 1, a pressure sensitive label laminate structure consists of a release liner 6 coated with a release agent, such as silicone, and a facestock 2 which are laminated together with a pressure sensitive adhesive layer 4 (PSA) in between. The release liner protects the adhesive and is removed prior to application of the label to a surface of an item. It is also possible that the label does not comprise a laminated structure containing a release liner, i.e. the label may only consists of the facestock layer 2 and the adhesive layer 4.

The adhesive layer may consist of a pressure-sensitive adhesive. The adhesive layer may also consist of an adhesive that can be activated by some energy source, such as heat, IR or laser.

The facestock 2 may have a single-layer (monolayer) polymer film (plastic film) structure. Alternatively, the facestock may have a multilayer structure consisting of a multilayer polymer film structure having two or more polymer film layers. The facestock comprising multilayer structure may be coextruded or laminated. The multilayer structure may comprise polymeric films having same composition. Alternatively the composition of the polymer films may be different. The thickness of individual films in a multilayer structure may also vary. In multilayer structure, e.g. three layer structure, the composition of different layers may be varied and more tailored facestock may be achieved. Thanks to the optimized multilayer structure, for example, performance or handling of the label during subsequent converting, e.g. printing, may be improved.

The polymer film may be coextruded and produced through blown film extrusion technology. Alternatively film(s) may be produced by cast extrusion technology. The plastic film(s) of the facestock layer are non-oriented, i.e. the molecule chains of the polymer are not aligned in a specific direction(s). Thus the films are not oriented by drawing or stretching after the film manufacturing, such as extrusion. Thanks to the non-oriented structure a good conformability of the plastic film for label applications is achieved. Conformability defines the capability of the label to conform smoothly to the contour of the item even when this is curved in two-dimensions. Thus label material should be flexible enough to conform with the surface of the item, i.e. with the underlying contour, without wrinkles.

The label structure may also comprise other layers in order to improve features, such as label functionality, conformability, printability, die-cutting, mechanical properties, or visual appearance. For example, tie layer, top coat or over-laminate may be applied to the facestock for protection or to enhance the adhesion of ink and/or adhesive.

Alternatively, facestock layer(s) i.e. adhesive and/or print receiving layer(s) may be surface treated by known methods in the art, such as flame treatment, corona treatment, plasma treatment in order to enhance for example adhesion.

A facestock layer may comprise bio-derived polymers, such as bio-based polyethylene, also called as green PE or renewable polyethylene. The bio-derived polyethylene may be based on ethanol derived from renewable resources, such as sugarcane, sugar beet and wheat grain. By using non-oil based polymers for label films, the environmental burden may be reduced i.e. the CO₂ foot print is reduced. Alternatively, the facestock layer may be totally based on petroleum based raw materials, such as petroleum based (oil based) polyethylene(s). It is also possible that the facestock layer includes both bio-derived and fossil based raw materials. Fossil based raw materials may be, either biodegradable or non-biodegradable. The bio-level of the facestock, which means the level of bio-derived materials of the facestock, may be at least 1 or 2%, preferably at least 5 or 10%. The bio-level may be, for example, from 5 to 98% preferably from 45 to 95% or from 80 to 95%.

According to an embodiment, a polymer film comprises a base polymer, which can also be called a main component. In addition, the polymer film includes additives, also called as modifiers or a minor component. For example, the facestock comprises a polymer blend as a main component. Different grades of PE have been synthesized and various ethylene polymers may be used in films.

The blend may include different grades of PE, such as HDPE, LLDPE, LDPE, or different kind of mixtures thereof. For example, a polymeric film may have a composition including LDPE and HDPE.

A high density polyethylene (HDPE) has low degree of branching and thus stronger intermolecular forces. Thus, films consisting of HDPE have good mechanical properties, such as stiffness and tensile strength. A low density polyethylene (LDPE) is branched, a semicrystalline thermoplastic material. LDPE is used when clarity, flexibility, toughness, or good die-cutting performance of the films is desired. LDPE is also easy to process during film processing. Further, films of LDPE have good conformability. Linear low density polyethylene (LLDPE) is substantially linear polymer with short branches. It forms large crystallites that result in surface irregularities and films having poor optical properties.

A polymer film may comprise, for example, a blend including thermoplastic starch. Starch may be either pure or blended with other polymers, such as poly(caprolactone) (PCL). A polymer film may also include biodegradable polymers, such as poly(lactic acid) also called as a polylactide (PLA). A polymer film may also include hemicellulose. Hemicellulose may be modified through esterification, i.e. acetylation. A polymer film may also include cellulose or starch modifications.

The polymer film may include additives, such as wood based rosin esters, hydrocarbon resins, polystyrene (PS), polypropylene (PP) or mixtures thereof. The amount of additives is at least 5 wt-%, preferably at least 10 or 20 wt-%. In addition, the amount of additives is not greater than 40 wt-%, preferably not greater than 30 wt-%. For example, the amount of additives is between 5 and 40 wt-%, preferably between 10 and 30 wt-%, most preferably between 5 and 25 wt-% or between 10 and 25 wt-%. Blending with additives typically increases the stiffness of the facestock layer and thus improves e.g. the dispensing performance of the label. The additive may also decrease the haze of the film. The film may further include plasticizer(s) and/or compatibilizer(s).

According to an embodiment, the facestock layer 2 has a plastic film formulation comprising a main component (base polymer) of at least one of the following LDPE, LLDPE or HDPE and a plastic modifier as a minor component.

The plastic modifier may be at least one of the additives listed above. Preferably the plastic modifier comprises at least hydrocarbon resin. The amount of HC may be at least 5 wt-%, most preferably at least 10 or 20 wt-%. In addition, the amount of HC is not greater than 40 wt-%, preferably not greater than 30 wt-%. For example, the amount of HC is between 5 and 40 wt-%, preferably between 10 and 30 wt-%, most preferably between 5 and 25 wt-% or between 10 and 25 wt-%.

The main component of the plastic film may be petroleum based or bio-derived polyethylene. Alternatively, it may include a mixture of petroleum based and bio-derived polyethylene. Thanks to the bio-derived PE the label poses less of an environmental burden when compared to petroleum based polyethylenes. An amount of the main component of the plastic film may be at least 40 wt-%, preferably at least 50 or 60 wt-%. For example, the amount of main component is from 50 to 85 wt-%, and most preferably from 60 to 80 wt-% based on the total weight of the plastic film composition.

In order to optimize facestock properties, plastic films of a multilayer facestock structure, e.g. a three layer structure, may have different formulations. For example, skin layers may have less base polymer and increased additive amount when compared to a core layer.

According to an embodiment, the plastic film may comprise only LDPE as a main component. The amount of LDPE may be at least 50 or 60 wt-%, preferably at least 70 wt-%, most preferably at least 80 wt-%. For example, the amount of LDPE is between 50 to 80 wt-%, most preferably between 60 to 80 wt-%. Alternatively, it is possible to use different kind of blends comprising LDPE, LLDPE and/or HDPE. For example, the main component of the plastic film comprises a blend of LDPE and HDPE. The amount of HDPE is at most 20 wt-%, preferably less than 15 or 10 wt-%, and most preferably less than 5 wt-%. For example, the amount of HDPE is between 5 and 15 wt-%, preferably between 5 and 10 wt-%. The melt flow rate of the HDPE and LLDPE may be from 0.5 g/10 min up to 7 g/10 min, when measured using temperature of 190 °C and 2.16 kg polymer. LDPE may have melt flow rate between 1.5 and 4 g/10 min and density between 928 and 935 kg/m³.

According to an embodiment, an amount of bio-derived raw material of the plastic film may be, for example up to 25 wt-%. For example, the plastic film of a facestock layer may comprise at least 25 % of green PE.

According to an embodiment, in the plastic film the amount of LLDPE having bio-based ethylene monomer may be at least 10 wt-%, preferably from 15 to 20 wt-%.

It is possible that PE of the plastic film is totally bio-based polyethylene, such as LLDPE. However, it is possible that plastic film consists of only petroleum based polyethylene. Different grades of green PE may be used, for example HDPE, LLDPE or LDPE. In HDPE the content of bio-based monomers may be about 95% and in LLDPE about 87%. The melt flow rate of HDPE may be 7.2 (g/10min) and density 0.959 g/cm³. LLDPE may be a copolymer of ethylene with alpha olefins, such as a copolymer of ethylene and 1-butene having melt flow rate 2.7 (g/10min) and density 0.918 g/cm³.

According to an embodiment, in addition to the main component, the plastic film includes a compound of hydrocarbon resin as a plastic film modifier (minor component). The amount of hydrocarbon resin compound may be from 10 to 60 wt-%, preferably from 30 to 60 wt-% based on the total weight of the plastic film composition. The hydrocarbon resin compound includes at least one hydrocarbon resin (HC). An amount of HC is at least 5 or 10 wt-%, preferably at least 20 or 30 wt-%, most preferably at least 40 or 70 wt-%. For example, the amount of HC is between 10 and 30 wt-%, preferably between 20 and 40 wt-%, most preferably between 40 and 70 wt-% based on the total weight of the hydrocarbon compound. In addition to hydrocarbon resin, the hydrocarbon resin compound includes polyethylene, such as LLDPE comprising bio-based ethylene monomers. Alternatively, LLDPE of the compound may be petroleum based. Also other grades of polyethylene may be used. The polyethylene of the HC resin compound may also be petroleum based. An amount of PE may be between 70 and 90 wt-%, preferably between 60 and 80 wt-%, most preferable between 30 and 60 wt-%. For example, the amount of PE is at least 40 wt-% based on the total weight of the HC resin compound. Hydrocarbon resin compound may also include other ingredients, such as wood based rosin esters, polystyrene (PS), polypropylene (PP) or mixtures thereof.

The hydrocarbon resins are low molecular weight compounds consisting only of hydrogen and carbon. Hydrocarbon resin may have amorphous structure and may be derived from synthetic or natural monomers. Saturated hydrocarbons are composed entirely of single bonds and are saturated with hydrogen (fully hydrogenated). Hydrocarbon resin may be aromatic, i.e. having at least one aromatic ring. Alternatively it may be acyclic or cyclic aliphatic resin. The number average molecular weight (Mₙ) of HC may be below 2000 g/mol. For example, Mₙ may be between 400 and 500 g/mol and M_{w} (weight average molecular weight) between 600 and 700 g/mol, when measured via gel permeation chromatography using PS standards. Softening point according to ASTM E 28 may be below 140 °C, preferably between 90 and 110 °C.

Thanks to the additive comprising hydrocarbon resin, the properties of the plastic film containing polyethylene may be varied. For example, by the HC addition the stiffness of the polyethylene film can be increased thus causing decrease of the film flexibility. Thanks to the increased stiffness the film thickness may be down gauged, i.e. thinner facestock layer for label can be provided. For example, the bending stiffness of the film is at least 30 mN, preferably at least 45 mN, most preferably 60 mN, when tested according to L&W bending resistance measurement for the film sample in machine direction. In addition, the bending stiffness is not greater than 100 mN,. For example, the thickness of the film is not greater than 95 µm, preferably not greater than 85 µm, most preferably not greater than 80 µm. The thickness may be, for example, between 50 and 85 µm or preferably between 60 and 70 µm. Thanks to the to the film properties also better die-cutting performance of the label can be achieved. The addition of HC also gives better optical properties for the film. It renders the PE films more transparent and the haze of the film can be reduced. From the optical point of view, the high transparency of the facestock layer is preferred. The haze of the film may be less than 60%, preferably less than 50% or less than 30%, and most preferably equal or less than 25%, when measured according to the standard ASTM D1003. In addition, the haze is at least 5 or 10%, preferably at least 12 or 15%. For example, the haze is between 10 and 30%, or preferably between 15 and 25% or between 10 and 20%.

For allowing processing in usual labelling devices, the facestock layer should have sufficient mechanical properties. For example, facestock layer should have sufficient modulus and stiffness values in order to provide dispensing performance for the label. From the economical point of view, the smallest possible thickness of the facestock is preferred. The facestock layer may have an overall thickness of 60-100 microns, preferably 70-75 microns. The thickness of individual plastic film layers in multilayer facestock structure may vary.

According to one embodiment, the facestock layer has a modulus value in machine direction of around 450 MPa, or even more. The elongation in machine direction (MD) may be at the maximum 1400%, preferably not more than 400%. The elongation in transverse direction (TD) may be around 200%. Thanks to the lower elongation rates better die-cut performance of the facestock will be achieved.

According to an example embodiment, a facestock having a plastic film comprising low density polyethylene and an additive has a haze at most 25%, stiffness (tested according to L&W bending resistance measurement for the film sample in machine direction) between 40 and 50 mN or between 35 and 60 mN, and a thickness of less than 80 microns. An amount of additive may be between 5 and 40 wt-%, preferably between 10 and 30 wt-%, most preferably between 5 and 25 wt-% or between 10 and 25 wt-%. In addition, the plastic film comprises high density polyethylene (HDPE). An amount of HDPE is at most 20 wt-%, preferably less than 15 or 10 wt-%, and most preferably less than 5 wt-%.

According to another example embodiment, a facestock having a plastic film comprising low density polyethylene and an additive has a haze at most 30%, stiffness (tested according to L&W bending resistance measurement for the film sample in machine direction) greater than 40 mN, and a thickness of less than 85 microns. An amount of additive may be between 5 and 40 wt-%, preferably between 10 and 30 wt-%, most preferably between 5 and 25 wt-% or between 10 and 25 wt-%. In addition, the plastic film comprises high density polyethylene (HDPE). An amount of HDPE is at most 20 wt-%, preferably less than 15 or 10 wt-%, and most preferably less than 5 wt-%.

A method for manufacturing a laminate web structure 1 for labels comprises at least the following steps: manufacturing a plastic film for facestock layer 2 by extrusion or casting from raw materials including at least one of the following HDPE, LLDPE or LDPE as a main component, and hydrocarbon resin as a minor component, coating a release liner with a releasing agent, e.g. silicone, coating a facestock layer 2 with an adhesive layer 4, laminating the facestock layer 2 and the release liner 6 together with the adhesive layer 4 in between. Alternatively adhesive layer may be coated on top of the release agent layer of the release liner prior to laminating step. The facestock layer may be printed in order to provide a visual effect or provide information. The facestock may be printed on the reverse side so that the print layer is between the facestock layer 4 and the adhesive layer 2. Thanks to the reverse side printing of the facestock there will be no need for an additional over-lamination layer to protect the printing. Alternatively, the printing and adhesive layers may be provided on opposite surfaces of the facestock, i.e. the printing may be on the exterior side of the facestock. The facestock layer may also be surface treated prior to printing or coating with an adhesive layer.

Referring to Fig. 2, individual labels 3 of desired shape and size may be die-cut from the laminate structure 1. After cutting, a number of individual labels 3 may be attached to a liner 6, which remains uncut and continuous. Referring to Fig. 3, the individual labels 3 may be completely separate, i.e. also the liner 6 may be cut. After cutting and separating the label from the liner a surface of an adhesive layer 4 of the label is exposed so that the label can be attached to the surface of an item through the adhesive layer. The label may be used for labelling of items of different shapes and materials, such as glass or plastic bottles or other containers. Labels may be used in wide variety of labelling applications and end-use areas, such as food labelling, home and personal care product labelling, and labeling of industrial products.

The properties of facestock layer having polyethylene plastic film are to be illustrated in the following examples.

### Example 1.

A multilayer structure of facestock layer comprising three plastic film layers was produced by co-extrusion. All the films had substantially equal compositions and included at least one of the following LLDPE,HDPE or LDPE, and an additive comprising hydrocarbon resin.

### Example 2.

The facestock layer has a plastic film formulation comprising:

| | p.b.w (parts by weight) |
|---|---|
| Base polymer (main component) of LDPE, LLDPE or HDPE | 60 |
| Hydrocarbon resin compound (minor component) | 40 |
| total | 100 |

, wherein the hydrocarbon resin compound had a composition of

| | p.b.w (parts by weight) |
|---|---|
| LLDPE (having bio-based monomers) | 40 |
| Hydrocarbon resin | 60 |
| total | 100 |

In this film formulation the base polymers, LDPE and HDPE, were polyethylenes from petroleum resources. The LLDPE of base polymer and hydrocarbon compound was bio-based polyethylene LLDPE SLL318 from Braskem. The hydrocarbon resin was fully hydrogenated, such as Regalite R1090 from Eastman. Also other HC resins, such as Escorez 5300 from ExxonMobil Chemical, could have been used.

The monolayer plastic films having the above described formulation were produced by a cast extrusion process and tested in order to evaluate their properties.

The test results of the films are shown below in Table 1, wherein the MD means machine direction of the tested film and Adj L&W bending resistance of the film when adjusted to the to the same film thickness of 83 µm. Adj L&W bending resistance test was performed for the film sample in machine direction and having test parameters of: test sample width 38 mm; bending distance 5 mm, bending angle of 15°, and wherein the figure gives the force (in mN) needed to bend the sample of 15 degree angle.

**Table 1.**

| Composition | Thickness (µm) | Modulus in MD (MPa) | Adj L&W in MD (mN) (to 83 µm) | Haze (%) |
|---|---|---|---|---|
| LLDPE | 84 | 212 | 16 | 51 |
| LLDPE+HC compound | 81 | 299 | 19 | 25 |
| HDPE | 101 | 701 | 43 | 63 |
| HDPE+HC compound | 114 | 802 | 46 | 51 |
| LDPE | 106 | 164 | 13 | 25 |
| LDPE+HC compound | 103 | 238 | 14 | 21 |

The embodiments described above are only example embodiments of the invention and a person skilled in the art recognizes readily that they may be combined in various ways to generate further embodiments in accordance with the invention as claimed.

## Claims

1. A pressure sensitive label including a facestock layer and an adhesive layer against one side of the facestock layer, wherein the facestock layer is non-oriented and comprises a plastic film comprising low density polyethylene (LDPE), high density polyethylene (HDPE) and an additive of hydrocarbon resin (HC), wherein the plastic film comprises:
- at most 20 wt-% high density polyethylene (HDPE) and
- an additive of hydrocarbon resin (HC) between 5 and 40 wt-% and having Mₙ below 2000 g/mol.

2. The pressure sensitive label according to claim 1, wherein an amount of the hydrocarbon resin is preferably between 10 and 30 wt-%, most preferably between 5 and 25 wt-% or between 10 and 25 wt-%.

3. The pressure sensitive label according to claim 1 or 2, wherein an amount of the high density polyethylene is preferably less than 15 or 10 wt-%, and most preferably less than 5 wt-%.

4. The pressure sensitive label according to any of the preceding claims, wherein the haze of the facestock layer is less than 60%, preferably less than 50, and most preferably less than 30%, when measured according to the standard ASTM D1003.

5. The pressure sensitive label according to any of the claims 1-4, wherein the facestock layer has haze at most 25%, when measured according to the standard ASTM D1003, and stiffness between 35 and 60 mN, when tested according to L&W bending resistance measurement for the film sample in machine direction, and thickness of less than 80 microns.

6. A use of the pressure sensitive label according to any of the claims 1-5 for labelling of an item.

7. A method for producing a pressure sensitive label according to any of the claims 1-5, the method comprising:
providing a non-oriented facestock layer;
combining an adhesive layer to a release liner and to one side of the non-oriented facestock layer so as to form a laminated structure;
cutting the laminated structure so as to form individual labels.

8. A combination of an item and a pressure sensitive label according to any of the claims 1-5, wherein the pressure sensitive label has been attached to a surface of the item.

## Patentansprüche

1. Ein druckempfindliches Etikett mit einer Trägermaterialschicht und einer Klebstoffschicht gegen eine Seite der Trägermaterialschicht, wobei die Trägermaterialschicht nicht orientiert ist und eine Kunststofffolie aufweist, die Polyethylen niedriger Dichte (LDPE), Polyethylen hoher Dichte (HDPE) und einen Zusatz aus Kohlenwasserstoffharz (HC) aufweist, wobei die Kunststofffolie aufweist:
- höchstens 20 Gew.-% Polyethylen hoher Dichte (HDPE) und
- einen Zusatz aus Kohlenwasserstoffharz (HC) zwischen 5 und 40 Gew.-% und mit einem Mₙ unter 2000 g/mol.

2. Das druckempfindliche Etikett nach Anspruch 1, wobei eine Menge des Kohlenwasserstoffharzes vorzugsweise zwischen 10 und 30 Gew.-%, am meisten bevorzugt zwischen 5 und 25 Gew.-% oder zwischen 10 und 25 Gew.-% liegt.

3. Das druckempfindliche Etikett nach Anspruch 1 oder 2, wobei eine Menge des Polyethylens hoher Dichte vorzugsweise weniger als 15 oder 10 Gew.-% und am meisten bevorzugt weniger als 5 Gew.-% beträgt.

4. Das druckempfindliche Etikett nach einem der vorhergehenden Ansprüche, wobei die Trübung der Trägermaterialschicht weniger als 60 %, vorzugsweise weniger als 50 und am meisten bevorzugt weniger als 30 % beträgt, gemessen nach der Norm ASTM D1003.

5. Das druckempfindliche Etikett nach einem der Ansprüche 1 - 4, wobei die Trägermaterialschicht eine Trübung von höchstens 25 %, wenn gemessen nach der Norm ASTM D1003, und eine Steifigkeit zwischen 35 und 60 mN, wenn gemessen nach der L&W-Biegewiderstandsmessung für die Folienprobe in Maschinenrichtung, und eine Dicke von weniger als 80 Mikron aufweist.

6. Eine Verwendung des druckempfindlichen Etiketts nach einem der Ansprüche 1 - 5 zur Kennzeichnung eines Gegenstandes.

7. Ein Verfahren zur Herstellung eines druckempfindlichen Etiketts nach einem der Ansprüche 1 - 5, wobei das Verfahren umfasst:
Bereitstellen einer nicht orientierten Trägermaterialschicht;
Kombinieren einer Klebstoffschicht mit einer Trennlage und mit einer Seite der nicht orientierten Trägermaterialschicht, um eine laminierte Struktur zu bilden;
Schneiden der laminierten Struktur, um so einzelne Etiketten zu bilden.

8. Eine Kombination aus einem Gegenstand und einem druckempfindlichen Etikett nach einem der Ansprüche 1 - 5, wobei das druckempfindliche Etikett an einer Oberfläche des Gegenstandes befestigt ist.

## Revendications

1. Étiquette sensible à la pression comportant une couche de pellicule frontale et une couche adhésive contre un côté de la couche de pellicule frontale, dans laquelle la couche de pellicule frontale est non orientée et comprend un film plastique comprenant du polyéthylène basse densité (LDPE), du polyéthylène haute densité (HDPE) et un additif de résine hydrocarbonée (HC), dans laquelle le film plastique comprend :
- au plus 20% en poids de polyéthylène haute densité (HDPE) et
- un additif de résine hydrocarbonée (HC) entre 5 et 40% en poids et ayant un Mₙ inférieur à 2000 g/mol.

2. Étiquette sensible à la pression selon la revendication 1, dans laquelle une quantité de la résine hydrocarbonée est de préférence comprise entre 10 et 30% en poids, idéalement entre 5 et 25% en poids ou entre 10 et 25% en poids.

3. Étiquette sensible à la pression selon la revendication 1 ou 2, dans laquelle une quantité du polyéthylène haute densité est de préférence inférieure à 15 ou 10% en poids, et idéalement inférieure à 5% en poids.

4. Étiquette sensible à la pression selon l'une des revendications précédentes, dans laquelle le trouble de la couche de pellicule frontale est inférieur à 60%, de préférence inférieur à 50, et idéalement inférieur à 30%, lorsqu'il est mesuré selon la norme ASTM D1003.

5. Étiquette sensible à la pression selon l'une des revendications 1 à 4, dans laquelle la couche de pellicule frontale présente un trouble d'au plus 25%, lorsqu'il est mesuré selon la norme ASTM D1003, et une rigidité comprise entre 35 et 60 mN, lorsqu'elle est testée selon la mesure de résistance à la flexion L&W pour l'échantillon de film dans le sens machine, et une épaisseur inférieure à 80 microns.

6. Utilisation de l'étiquette sensible à la pression selon l'une des revendications 1 à 5 pour l'étiquetage d'un article.

7. Procédé de production d'une étiquette sensible à la pression selon l'une des revendications 1 à 5, le procédé comprenant :
fournir une couche de pellicule frontale non orientée ;
combiner une couche adhésive à une doublure antiadhésive et à un côté de la couche de pellicule frontale non orientée de manière à former une structure stratifiée ;
découper la structure stratifiée de manière à former des étiquettes individuelles.

8. Combinaison d'un article et d'une étiquette sensible à la pression selon l'une des revendications 1 à 5, dans laquelle l'étiquette sensible à la pression a été attachée à une surface de l'article.
